Europäisches Patentamt

European Patent Office

Office européen des brevets

(11) Publication number: 0 335 525
A1

## EUROPEAN PATENT APPLICATION

(21) Application number: 89302522.1

(22) Date of filing: 15.03.89

(51) Int. Cl.⁴: F41H 5/02

The title of the invention has been amended (Guidelines for Examination in the EPO, A-III, 7.3).

(30) Priority: 15.03.88 US 168363

(43) Date of publication of application:
04.10.89 Bulletin 89/40

(84) Designated Contracting States:
AT BE CH DE ES FR GB IT LI NL SE

(71) Applicant: THE DOW CHEMICAL COMPANY
2030 Dow Center Abbott Road P.O. Box 1967
Midland Michigan 48640-1967(US)

(72) Inventor: Knudsen, Arne K.
4006 Oak
Midland Michigan 48640(US)
Inventor: Brubaker, Burton D.
1702 Sylvan Lane
Midland Michigan 48640(US)

(74) Representative: Burford, Anthony Frederick et al
W.H. Beck, Greener & Co. 7 Stone Buildings
Lincoln's Inn
London WC2A 3SZ(GB)

(54) Armour plate material.

(57) An armor article for providing protection from projectiles comprises AIN and has a ballistic efficiency of at least 0.84, and can be prepared economically via pressureless sintering.

EP 0 335 525 A1

## ARMOR

Background of the Invention

The present invention relates to armor material and more particularly to armor material for use in providing protection against projectiles and fragments.

Several factors are important in the consideration of armor for the protection of personnel and hardware. Most important, of course, is the ability of the armor to stop or deflect projectiles. The resistance to penetration is dependent upon the nature of the projectile, the thickness of the armor and its physical support, as well as the intrinsic material properties of the armor itself. A parameter important in vehicular, in particular airborne, applications is the armor's density. Considerable amounts of material are frequently required for adequate protection. Thus, lighter armors place less stringent demands upon the engineering of vehicle design and propulsion. In addition, less dense armors offer the opportunity to use greater thicknesses with a smaller weight penalty. An additional factor important for the economical production of armored vehicles is the cost of the required armor. Clearly, a low cost material with the necessary ballistic performance has an advantage in armor applications.

Traditionally, steel has been the material of choice in armor, for several reasons. It is inexpensive, easy to fabricate, reliable and exhibits satisfactory ballistic performance. Unfortunately, steel is quite heavy, with a density typically in the range of 8 $g/cm^3$. In an effort to develop lighter armor materials, a number of ceramics have been examined in armor applications. Aluminum oxide, a low cost ceramic with a density near 4 $g/cm^3$ and a high compressive strength, represents a potentially useful armor. Its ballistic performance is approximately twice that of steel against 0.30 caliber armor piercing (hereinafter AP) projectiles. In addition, aluminum oxide armor is available at a price comparable to steel as a consequence of inexpensive fabrication techniques using low cost $Al_2O_3$ powder. Specifically, $Al_2O_3$ parts can be prepared by pressureless sintering, an inherently low cost, large scale process when compared to alternative methods for fabricating dense ceramics. Pressureless sintering entails the densification of porous (40-70 percent of theoretical density) powder compacts (greenware) at high temperatures.

Besides alumina, other ceramics, including other oxides, as well as a variety of carbides, nitrides, and borides, also represent potentially useful armor material. By virtue of its low density and high hardness, boron carbide has been utilized in helicopters for the protection of pilots. However, high performance boron carbide must be hot pressed, i.e., subjected to the simultaneous application of heat and mechanical pressure, to achieve fully dense parts. Hot pressing is an intrinsically more expensive densification technique than is pressureless sintering. In addition, hot pressed parts are limited to simple geometric shapes. Thus, hot pressed ceramic parts do not represent low cost armor.

Brittleness is a principle limitation of ceramics in many applications. A ceramic's fracture toughness, or ability to resist fracture, is typically quite low relative to metals, which can deform plastically under stress. This plastic deformation during, for example, ballistic impact, provides a mechanism, for relieving the stress introduced by a projectile. In addition, plastic deformation increases the amount of time required for a projectile to penetrate the armor. This additional time is accompanied by continued projectile erosion. Thus, ductility during impact is a mechanism for reducing the likelihood of penetration, resulting in improved ballistic properties. Most ceramics exhibit little ductility but do perform well as armor because they possess high resistance to compression, represented by the compressive yield strength as well as the elastic impedance. Studies have shown that the elastic impedance can be related to the hardness of a material. For example, Viechnicki, D. et al., "Armor Ceramics-1987", presented at the Third Tacom Armor Coordinating Conference, 17-19 February, 1987, Monterey, CA, teaches that the ballistic performance of ceramic armor is correlated with high values for the elastic modulus, hardness, phase purity, and sonic velocity, and low values for the porosity, fracture toughness and Poisson's ratio.

Wilkins, M.L., et al., "Fourth Progress Report of Light Armor Program", Lawrence Livermore Laboratory, Rept. UCRL-50694 (1969) at page 22 summarize the results of ballistic tests performed on a variety of ceramic armor materials. Alumina exhibited ballistic efficiencies of from 0.66 to 0.73 relative to B4C. Other materials exhibited higher efficiencies, but most of these contained beryllium, which currently is disfavored in view of its suspected role as a source of health problems. Boron carbide, boron, and $AlB_{12}$ were the remaining armors which performed better than alumina. However, these materials must be hot pressed and thus are too expensive for wide use in armor applications.

Accordingly, it would be desirable to have a relatively low density, low cost ceramic armor which would provide improved ballistic efficiency compared to many other ceramic armors.

## Summary of the Invention

The present invention includes such an armor for providing protection against projectiles, the armor including sintered aluminum nitride and having an improved ballistic efficiency. Surprisingly, this relatively low cost, low density armor provides improved penetration resistance compared to other low cost, low density materials. This is unexpected in view of the criteria of Viechnicki, et al., supra, as this material is not particularly hard, possessing a hardness which is approximately half that of aluminum oxide and one third that of boron carbide. Additionally, the values for elastic modulus, phase purity, sonic velocity, porosity, fracture toughness and Poisson's ratio do not predict that sintered aluminum nitride would be a good armor material.

Armor of the present invention can be employed as protection of personnel in aircraft and land-based vehicles, and an be worn by individuals for protection against bodily harm.

## Brief Description of the Drawings

Figure 1 is a scanning electron micrograph of the fracture surface of pressureless sintered AIN prepared as in Example 1.

Figure 2 is a scanning electron micrograph of the fracture surface of hot pressed AIN prepared as in Comparative Experiment 1.

## Detailed Description of the Invention

The armor of the present invention can be prepared from pure aluminum nitride or aluminum nitride plus one or more sintering aids.

Aluminum nitride is a well known material. The aluminum nitride powder employed in the present invention can be formed by any of several known processes. Examples of synthetic routes for producing powders suitable for the practice of this invention are the so-called carbothermal synthesis and the nitridation of aluminum metal. In the carbothermal reaction, aluminum oxide and carbon powders are mixed and calcined at temperatures of approximately 1700°C in a nitrogen atmosphere. The nitridation reaction involves the reaction of aluminum metal with nitrogen gas at temperatures of approximately 1000°C. These processes have been shown to produce fine (< 1 micrometre average particle size), high purity, non-agglomerated powders suitable for the preparation of AIN armor. One skilled in the art could envision other synthetic procedures which would result in powders suitable for use in AIN armor. Aluminum nitride is a commercially available material. A typical AIN powder which can be employed in the present invention has, for example, an aluminum nitride content of at least 94%, a bound oxygen content of at most 5% by weight and an impurity content of at most 1% by weight (as metal). Of course, metallic compounds added as sintering aids are not considered impurities.

A preferred fine powder of aluminum nitride is at least 97% aluminum nitride by weight, and preferably has a bound oxygen content of at most 3% by weight and an impurity content of at most 0.5% by weight (as metal). Bound oxygen is believed to exist in a form bound to metals included as impurities or in the form of aluminum oxide. The bound oxygen content and the impurity content greatly affect the sinterability of aluminum nitride. More preferably, the bound oxygen content is at most 2% by weight, and the impurity content is at most 0.3% by weight (as metal).

Metal compounds as impurities may come from impurities contained in the raw materials for production of aluminum nitride, or from solvents, mixing devices, piping, etc. during the manufacturing process. These impurities include compounds of silicon, manganese, iron, chromium, nickel, cobalt, copper, zinc and titanium. The content of such metal compounds in the fine aluminum nitride powder most preferably is 0.1% by weight (as metal) at the highest.

Among these impurities, the unreacted alumina and carbon, and aluminum oxide formed by oxidation of the surface of aluminum nitride do not aggravate the properties of the aluminum nitride of this invention. For example, the inclusion of cationic impurities such as alumina and silica in an amount of about 0.3 to 0.5% by weight does not adversely affect the sinterability of aluminum nitride under atmospheric pressure.

Preferably, the aluminum nitride powder employed in the present invention is such that it can be densified by sintering, optionally with the addition of a sintering aid, at 1900°C in a nitrogen atmosphere to greater than 90 percent of the theoretical density (3.26 g/cm$^3$) and has the following characteristics:
Average particle size: < 5 micrometres

3

Composition: < 94 percent AlN
Major Impurities:
Oxygen < 2 percent by weight,
Metals < 0.3 percent by weight.

Preferably, the powder should be one which can be sintered to full density either without or with an additive which promotes the development of a fully dense body. For example, the properties of a carbothermally-synthesized powder which can be pressureless sintered without the addition of a sintering additive are as follows:

Purity: >97% (99.9% metals basis)
%O: <1.2 %C: <0.10 Si: <200 ppm
Transition metals (Ni, Fe, Cr, Co, Cu): Each <10 ppm
Particle morphology: approximately equiaxed, loosely agglomerated
Ultimate particle size: Approximately 1 micrometre
Average surface area: 2-4 $m^2/g$
Color: white to light gray

Greenware prepared from a powder such as this can be pressureless sintered to full density (> 95 percent theoretical density) in a boron nitride crucible packed with aluminum nitride powder which is heated to 1900°C for a period of two hours in a nitrogen atmosphere.

Depending on its particle size and degree of agglomeration, the AlN powder may require a sintering aid in order to reach full density (> 95 percent theoretical density). AlN sintering aids facilitate the formation of a low temperature (less than the sintering temperature) liquid phase. This liquid functions as a flux for the diffusion of material, grain growth, and the elimination of porosity. This sintering aid may assist in the attainment of a high density part, and also may be beneficial in reducing the required sintering temperature. In addition, the sintering aid may act to improve the ballistic performance of the armor article. Thus, a sintering aid preferably is employed in the preparation of the armor of the present invention. Numerous compounds have been shown to be effective in the sintering of AlN powders. Such sintering aids include compounds of yttrium, the lanthanide metals, and of elements of Group IIA of the Periodic Table, including the oxides, nitrides, nitrates, aluminates, carbonates, carbides, etc.

Example of preferred sintering aids including compounds of at least one metal selected from the group consisting of alkaline earth metals, lanthanum group metals and yttrium. It has previously been known that these metal oxides are effective sintering aids for aluminum nitride. The alkaline earth metals include beryllium, magnesium, calcium, strontium and barium. Examples of the lanthanum group metals include lanthanum, cerium, praseodymium, neodymium, promethium, samarium, europium, gadolinium, terbium, dysprosium, holmium, erbium, thulium, ytterbium and lutetium. Of these, lanthanum, neodymium and cerium and mixtures thereof are preferred. Examples of more preferred sintering aid compounds include yttrium oxide, calcium oxide, calcium carbonate, lanthanum oxide, and tricalcium aluminate. In general, high purity is a beneficial property of a sintering aid to be employed in the process of the present invention. While the sintering aid can vary greatly in particle size, it is preferred that the average particle size of the sintering aid is from about 0.1 to about 5 micrometres, preferably with a maximum particle size of less than about 10 micrometres. If employed, the sintering aid is employed in an amount sufficient to promote sintering of the aluminum nitride. Preferably, from about 0 to about 3.6 mole percent of a Group IIA based sintering aid is employed based on the total moles of aluminum nitride plus sintering aid. Preferably, from about 0 to about 2.6 mole percent of a sintering aid based on a lanthanide metal or yttrium is employed based on the total moles of aluminum nitride plus sintering aid.

The sintering aid can be incorporated into the aluminum nitride powder by any known method. The main reason for blending the materials is to disperse uniformly the sintering aid in the aluminum nitride powder and thereby form an intimate mixture. Preferably, the particle or agglomerate size of the powders is also reduced by milling during the mixing step. The mixing and milling can be performed in any number of devices as is well known in the art. For example, it is preferred to use a milling apparatus such as a conventional ball mill. The mixing step can be conducted with or without a liquid medium.

The composite powder can be sintered according to methods well known in the art. These methods utilize variations in atmosphere, temperature and time to bind and consolidate the discrete ceramic powders into a densified monolithic ceramic component. Preferably the sintering is conducted at about atmospheric pressure. The time, temperature, and pressure can be varied according to criteria known to those skilled in the art to form an armor article.

In pressureless sintering a green ceramic body is typically formed. Methods of forming a green ceramic body are well known to those experienced in the art and include, but are not restricted to, uniaxial pressing, cold isostatic pressing, injection molding, extrusion, and slip casting. Thus, according to the present

4

method, the formation of a green body may be a necessary or a preferred step prior to densification. Preferably, the density of the greenware is at least 50 percent of its theoretical density.

It is to be understood that, at all stages of processing above 700°C, the aluminum nitride powder and greenware preferably are protected by a non-oxidizing atmosphere due to the potential for unwanted oxidation. Inert environments which are suitable for use as non-oxidizing atmosphere include, for example, nitrogen, a noble gas, mixtures thereof, and the like.

The aluminum nitride and sintering aid should be free of impurities which interact with the components in a manner which compromises the integrity of the structural ceramic, or which compromises any of the desired characteristics or properties of the composite. In accordance with the present invention, it is desirable, though not essential, that the powders be purified so that they are at least about 95% by weight pure. Preferably, these powders are of even greater purity such as, for example, at least about 98% by weight pure. Whenever possible and within practical limits, the powders are at least about 99.9% by weight pure.

When the aluminum nitride powder and sintering aid are subjected to processing conditions described hereinabove, there can be formed an armor article of the present invention. Preferably, the armor article is essentially free of free metals, boron nitride, and titanium diboride. For the purposes of the present invention, the term "essentially free" means that the subject material is not present or is present in an amount of less than about 1.0 weight percent. More preferred armors consist essentially of aluminum nitride and optionally, a sintering aid, while the most preferred armors consist of aluminum nitride and optionally, a sintering aid. It is preferred that the armor have a density of at least about 95 percent of theoretical density, more preferably, at least about 98 percent of theoretical density. Preferably, the armor of the present invention has a ballistic efficiency of at least 0.84, and more preferably the ballistic efficiency is at least 0.85. For the purposes of the present invention, the term "ballistic efficiency" is represented by the variable $\phi$ as defined by the following discussion.

In evaluating potential armor materials on a performance/weight basis, it is useful to consider the concept of areal density. Areal density (hereinafter AD), in units of g/cm², is the product of the thickness, L, necessary to stop a given projectile at a standard velocity, v, times the density of the material:

$AD = p \bullet L_v$.

For example, $L_{2700}$ would represent the thickness of armor required to repel a 0.30 caliber AP projectile at a velocity of 2700 ft/sec (820 m/sec). Thus, to compare armor "A" to armor "B", a ratio of AD values would provide a measure of the relative ballistic performance. To standardize the results reported in the present invention, all AD values will be compared to that of a commercially available hot pressed $B_4C$. This standard ballistic efficiency, $\phi$, is:

$$\phi_A = \frac{p_{B_4C} \quad L_{2700,B_4C}}{p_A \quad L_{2700,A}}$$

wherein values of $\phi_A$ greater than 1 indicate that material A performed better than $B_4C$ while materials with values of $\phi$ less than 1 are inferior to $B_4C$. Data for some representative materials (0.30 caliber AP simulator at 2700 ft/sec (820 m/sec) are given in Table 1.

Specific Embodiments of the Invention

The following examples and comparative experiments are given to illustrate the invention and should not be construed as limiting its scope. All parts and percentages are by weight unless otherwise indicated.

Example 1

A slip is prepared from the following components: 285 grams of commercial grade aluminum nitride; 15 grams of commercial grade $Y_2O_3$; 112.5 grams of HPLC grade toluene; 3 grams of menhaden fish oil; and 0.30 gram of a dispersant available from Chevron Chemical Company under the trade name ALOA/1200. The slip is placed into a polyethylene bottle which contains alumina balls. The bottle is closed and the formulation is milled for about 20 hours.

When the ball milling is complete, the slip is cast into disks using a plaster of Paris mold consisting of two pieces. One piece is a solid flat plate, and the other is a hollow ring which rests on the first plate. A total of 193 grams of the slip is used to fill the cavity in a series of five pours. (The approximate volume of the mold cavity is 84 cm$^3$.) Between each pour the mold cavity is covered with a flat glass plate to slow the loss of toluene vapors. The mold is continuously vibrated during casting to maintain the fluidity of the thixotropic slip. The cast disk is recovered and dried.

The preceding procedure is repeated until six disks are prepared. The dired disks are stacked on top of each other in a graphite crucible. A small amount of boron nitride powder, which is inert under these processing conditions, is used to prevent direct contact between the AIN disks and the flexible graphite sheets that are used as separators between the disks. The flexible graphite sheets also are used in order to enhance temperature uniformity during sintering. The crucible is placed in a graphite electrical resistance furnace having an atmosphere of flowing nitrogen. The disks are then sintered at 1,875°C for 2 hours. The disks are allowed to cool and are machined to obtain flat and parallel top and bottom surfaces. The sintered disks are between 99.5 and 100% of the theoretical density.

## Comparative Experiment 1

Aluminum nitride powder (120 grams) is loaded into a 3-inch (7.6 cm) diameter graphite hot pressing die. The inner surfaces of the die wall are lined with sheets of flexible graphite material having a thickness of 0.005 inch (0.13 mm). The plunger faces of the hot press die are covered with sheets of the flexible graphite material having a thickness of 0.015 inch (0.38 mm) and which are coated with a boron nitride powder. The sample is hot pressed at 1,800°C and 3,000 psi (21 Mpa) in a nitrogen atmosphere until shrinkage ceases, as measured by a mechanical transducer. The density of the hot pressed part is 3.26 grams/cm$^3$, i.e., 100 percent of theoretical density. The preceding procedure is repeated several times, and the resulting tiles are machined to a thickness of 0.28 inch (7.1 mm)

## Ballistic Performance

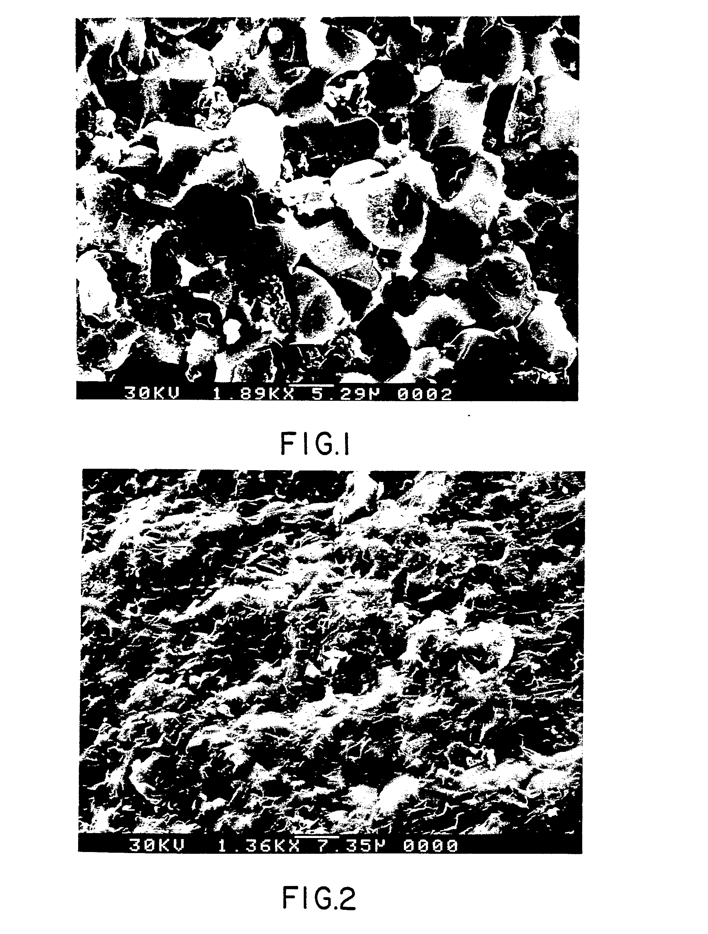

The machined tiles from Example 1 and Comparative Experiment 1 are mounted on aluminum plate having a thickness of 0.25 inch (6.4 mm) using a polyurethane adhesive available from CONAP, Inc. under the trade name Conathane TU-600. The tiles are mounted firmly and are subjected to an impact of a 0.30 inch (7.6 mm) diameter stainless steel projectile. This projectile is a bullet-shaped cylinder machined from hardened Grade F7 high strength steel (Rockwell C hardness 54-56) with the nominal dimensions of a 0.30 caliber round (0.9" (23 mm) long, 0.3" (7.6 mm) diameter, 8.32 g). The results are summarized in Table 1. The fracture mode of the tile of Example 1 is intergranular. See Figure 1. The fracture mode of the tile of Comparative Experiment 1 is transgranular. See Figure 2.

Surprisingly, the aluminum nitride armor of the present invention demonstrates an ability to resist penetration from 0.30 caliber projectiles with a ballistic efficiency of 0.85 for the sintered AIN of Example 1, as compared to the ballistic efficiency of 0.83 for the hot-pressed material of Comparative Experiment 1. Corresponding to an increased efficiency of 2.4%, this represents a statistically significant improvement in ballistic performance. The result is surprising in light of the criteria for good ballistic performance reported by Viechnicki et al., supra. While improved armor performance is expected to correlate with high values for hardness, elastic modulus, sonic velocity and phase purity, sintered AIN is markedly inferior to hot pressed AIN in each. The hardness is lower by 20%. The modulus is 4.5% lower. $V_s$ is reduced by 3.6% and the phase purity is 4% lower. Improved ballistic efficiency is also expected to follow from low values for porosity, $K_{Ic}$, Poisson's ratio, and density. While the levels of porosity are comparable in the sintered and hot pressed material, no conclusions can be drawn from the values for $K_{Ic}$ and Poisson's ratio. However, the density of the sintered material is 2% higher than that of the hot pressed material. The effect of the phase purity on the mode of fracture is illustrated in Figures 1 and 2. A fracture surface from the sintered material shows that fracture occurs in a primarily intergranular mode. The presence of a second phase in the sintered AIN results in fracture through this grain boundary phase. In contrast, the hot pressed material fails in a transgranular mode. Viechnicki et al., supra, associated superior armor performance with transgranular rather than intergranular fracture. Thus, using the correlations established by Viechnicki et al., supra, it is quite surprising that sintered AIN actually outperforms hot pressed AIN in ballistic testing.

TABLE 1

| Property | AlN(s) | AlN(HP)) | B₄C | Al₂O₃ | SiC(s) | TiB₂ |
|---|---|---|---|---|---|---|
| Hardness, VHN kg/mm$^2$ | 1040 | 1300 | 2740 | ~2000 | 2240 | 2300 |
| Elastic Modulus (GPa) | 294 | 308 | 457 | 393 | 408 | 551 |
| Sound Velocity (km/sec) | 10.6(l) | 11.0 (l) | 14.1 (l) 8.8 (s) | 10.7 (l) 6.3 (s) | 11.7 (l) 7.5 (s) | 11.2 (l) 7.4 (s) |
| Purity (w/o)% | 95 | 99 | 100 | 99 | 99.6 (0.4 B) | 100 |
| Porosity % | < 1 | < 1 | | | <1 | 3-4 | 2 |
| Poisson's Ratio | 0.245 | 0.245 | 0.175 | 0.235 | 0.16 | 0.11 |
| Fracture Toughness (MPa $M_2^{\frac{1}{2}}$ ) | - | 2.7 | 3.7 | - | 3.0 | 6.7 |
| Density (g/cm$^3$) | 3.32 | 3.26 | 2.52 | 3.95 | 3.22 | 4.52 |
| Ballistic Eff. $\overline{0.30 \text{ Cal AP}}$ | 0.85 | 0.83 | 1.00 | 0.66 | .81 | .58 |
| l = longitudinal | | | | | | |
| s = shear | | | | | | |

## Claims

1. An armor article for providing protection from projectiles, the article comprising AlN and having a ballistic efficiency of at least 0.84.

2. An article as claimed in claim 1, further comprising a sintering aid for AlN.

3. An article as claimed in Claim 1 or Claim 2, being essentially free of free metals, BN and TiB₂.

4. A sintered armor article consisting essentially of AlN.

5. An armor article consisting of aluminum nitride and a sintering aid therefor.

6. An article as claimed in Claim 4 or Claim 5, having a ballistic efficiency of at least 0.84.

7. An article as claimed in any one of the preceding claims, having a ballistic efficiency of at least 0.85.

8. An article as claimed in any one of Claims 2, 3, 5 6 and 7 comprising a sintering aid selected from lanthanum group metals, alkaline earth metals, yttrium and compounds thereof, and mixtures thereof.

9. An article as claimed in Claim 8, wherein up to 3.6 mole percent of a Group IIA based sintering aid is employed based on the total moles of aluminum nitride plus sintering aid.

10. An article as claimed in Claim 8, wherein up to 2.6 mole percent of lanthanide metal or yttrium based sintering aid is employed based on the total moles of aluminum nitride plus sintering aid.

11. An article as claimed in any one of Claims 8 to 10, wherein the sintering aid comprises a compound of yttrium.

12. An article as claimed in Claim 11, wherein the sintering aid comprises an oxide of yttrium.

13. An article as claimed in any one of Claims 8 to 10, wherein the sintering aid comprises a compound of calcium.

14. A article as claimed in any one of the preceding claims, prepared by sintering.

15. An article as claimed in Claim 14, prepared by pressureless sintering.

16. The use of AlN in the manufacture of armor articles.

17. A method of preparing an armor article which comprises sintering a green article comprising AlN.

18. A method as claimed in Claim 17, wherein the green article comprises a sintering aid.

19. A method as claimed in Claim 18, wherein the sintering aid is as defined in any one of Claims 8 to 13.

30KU    1.89KX  5.29P   0002

FIG.1

30KU    1.36KX  7.35P   0000

FIG.2

**European Patent Office**

Application number

EP 89302522.1

| Category | Citation of document with indication, where appropriate, of relevant passages | Relevant to claim | CLASSIFICATION OF THE APPLICATION (Int. Cl.⁴) |
|----------|------------------------------------------------------------------------------|-------------------|-----------------------------------------------|
| A | <u>DE - A - 1 578 333</u> (FELDMÜHLE A. U. P. GMBH) * Totality * | 1 | F 41 H 5/02 |
| P,A | <u>EP - A2 - 0 260 235</u> (SANDVIK AKT.) * Totality * | 1 | |

**DOCUMENTS CONSIDERED TO BE RELEVANT**

TECHNICAL FIELDS SEARCHED (Int. Cl.⁴)

F 41 H 5/00

The present search report has been drawn up for all claims

| Place of search | Date of completion of the search | Examiner |
|-----------------|----------------------------------|----------|
| VIENNA | 15-06-1989 | JASICEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| | | | |
|---|---|---|---|
| **EPA** | **HAUPTDIREKTION**<br>**RECHERCHE** | **ZWISCHENDIENSTLICHER**<br>**VERMERK**<br>— | Nummer der Anmeldung<br>Application number<br>Numéro de la demande |
| **EPO** | **PRINCIPAL DIRECTORATE**<br>**FOR SEARCHING** | **INTEROFFICE MEMO**<br>— | EP 89302522.1 |
| **OEB** | **DIRECTION PRINCIPALE**<br>**RECHERCHE** | **NOTE DE LIAISON** | Prüfer — Examiner — Examinateur<br>JASICEK |

☒ Feedback Gesuch – Request for feedback – Demande de feedback

Die in der Beschreibung erwähnte Literatur betrifft
einen älteren Stand der Technik. Um Zusendung des
ersten Bescheides wird gebeten.